# EUROPÄISCHE PATENTANMELDUNG

(11) **EP 0 890 776 A2**
(43) Veröffentlichungstag der Anmeldung: **13.01.1999**
(21) Anmeldenummer: 98112487.8
(22) Anmeldetag: 06.07.1998
(51) Int. Cl.: F16L 41/02, F16L 41/04

(54) **Rohrverzweigungsanordnung**

(30) Priorität: 27.08.1997 DE 19737353; 11.07.1997 DE 19729849
(71) Anmelder: Dürr Systems GmbH, 70435 Stuttgart (DE)
(72) Erfinder: Fodor, Mathias, 71686 Remseck (DE)
(74) Vertreter: Heusler, Wolfgang, Dipl.-Ing.

(57) **Zusammenfassung**

In ein T-Stück, dessen Längsteil in eine spülbare und molchbare Hauptrohrleitung eingesetzt ist und an dessen Querteil eine abgehende Rohrleitung angeschlossen ist, ist ein Kugelhahn für die abgehende Leitung derart eingebaut, daß bei geschlossenem Hahn kein wesentlicher Totraum zwischen der zylindrischen Innenfläche des Längsteils und dem Hahn verbleibt.

## Beschreibung

Die Erfindung betrifft eine Rohrverzweigungsanordnung gemäß dem Oberbegriff des Anspruchs 1.

Bei vielen Rohrleitungssystemen ist es wichtig, daß sie gut und einfach gereinigt, insbesondere gemolcht und gespült werden können und Ablagerungen des durch die Leitung fließenden Materials verhindert werden. Neben anderen Fällen wie z.B. der Lebensmittelindustrie sind ein typisches Beispiel hierfür die Ring- und sonstigen Farbversorgungsleitungen in Beschichtungsanlagen zur Serienbeschichtung von Werkstücken, etwa Kraftfahrzeugkarossen.

Die Ringleitungen der bekannten Beschichtungsanlagen für Kraftfahrzeugkarossen enthalten an den Abzweigungsstellen für die zu den einzelnen Beschichtungsvorrichtungen führenden Leitungen ein T-Stück, an dessen Querteil die abzweigende Leitung angeschlossen ist. Ein zum Öffnen und Sperren der abgehenden Leitungen dienendes steuerbares Absperrorgan befindet sich außerhalb des eigentlichen T-Stücks in der abgehenden Leitung. Wenn nun die Ringleitung bei geschlossenem Absperrorgan gespült wird, ergibt sich das Problem, daß das in dem Totraum zwischen der in den Querteil des T-Stücks führenden Öffnung und dem Absperrorgan stehende Material verlorengeht und zum großen Teil nicht herausgespült wird, sondern in dem Totraum vrebleibt und sich ablagern kann. In Beschichtungsanlagen kann sich durch die Ablagerungen die Beschichtungsqualität verschlechtern.

Der Erfindung liegt demgemäß die Aufgabe zugrunde, eine Rohrverzweigungsanordnung mit einer einwandfrei molchbaren und spülbaren Hauptleitung anzugeben, bei der weitgehend verhindert wird, daß ein Teil des Materials beim Spülen der Hauptleitung in der Verzweigungsstelle zurückbleibt.

Diese Aufgabe wird durch die im Anspruch 1 gekennzeichnete Rohrverzweigungsanordnung gelöst. Weiterbildungen und Ausgestaltungen der Erfindung sind in den Unteransprüchen angegeben.

Durch die Erfindung wird erreicht, daß die Verzweigungsstellen weitgehend frei von toten Räumen sind, die beim üblichen Spülen der Ring- und sonstigen Hauptleitungen nicht mitgespült werden und auch zu Materialverlusten führen.

Ein weiterer Vorteil der Erfindung ist eine Reduzierung des konstruktiven Aufwands und des Montageaufwands. Durch den Einbau des Absperrorgans in das T-Stück wird ein gesondertes Bauteil für dieses Organ eingespart, das sonst z.B. an das T-Stück angeschraubt oder angeschweißt werden müßte.

Wesentlich ist ferner, daß zumindest die Hauptleitung einschließlich des in ihr enthaltenen T-Stücks gut molchbar ist. Die Spül- und Molchbarkeit wird in Weiterbildung der Erfindung durch eine besondere Schraubverbindung der Leitungsrohre mit dem T-Stück verbessert, die glatte, spaltfreie und stufenlose Übergänge der Innenflächen ebenfalls ohne tote Räume und mit geringem Aufwand und ohne Schweißverbindung ermöglicht.

An dem in der Zeichnung dargestellten Ausführungsbeispiel wird die Erfindung näher erläutert. Es zeigen:
- Fig. 1: einen Längsschnitt durch die Rohrverzweigungsanordnung längs der Achsen der miteinander verbundenen Leitungsrohre; und
- Fig. 2: einen Querschnitt durch Fig. 1 längs der Ebene der Achse der abgehenden Leitung.

Gemäß der Darstellung ist ein T-Stück 1 mit seinem rohrförmigen Längsteil 2 zwischen zwei Leitungsrohre 3, 3' einer Haupt-rohrleitung eingesetzt, bei der es sich z.B. um eine aus Stahl bestehende Ringleitung für die Farbversorgung einer Beschichtungsanlage handeln kann. Das T-Stück 1 dient zur Materialentnahme aus der Hauptrohrleitung und ist zu diesem Zweck mit seinem allgemein rohrförmigen Querteil 5 an das Leitungsrohr 6 der abgehenden Leitung angeschlossen.

Das Querteil 5 des T-Stücks ist zweiteilig und besteht einerseits aus dem mit dem Längsteil 2 einstückig geformten Innenteil 5A und andererseits aus einem deckelartig auf die zur Längsteilachse parallele äußere Stirnfläche des Innenteils 5A geschraubten, allgemein rohrförmigen Außenteil 5B.

Der Weg aus dem Längsteil 2 in den Querteil 5 wird durch eine zylindrische Bohrung 10 gebildet, die an der Mitte des Längs-teils 2 von dessen zylindrischer Innenfläche radial nach außen in einen sich erweiterenden Innenraum 11 des Innenteils 5A führt. Am äußeren Ende des Innenteils 5A steht der Innenraum 11 darstellungsgemäß durch eine Öffnung mit dem Außenteil 5B in Verbindung. Am Rand der Bohrung 10 und der in den Außenteil 5B führenden Öffnung ist der Innenraum 11 jeweils mit einem Kugelsitz 13 versehen.

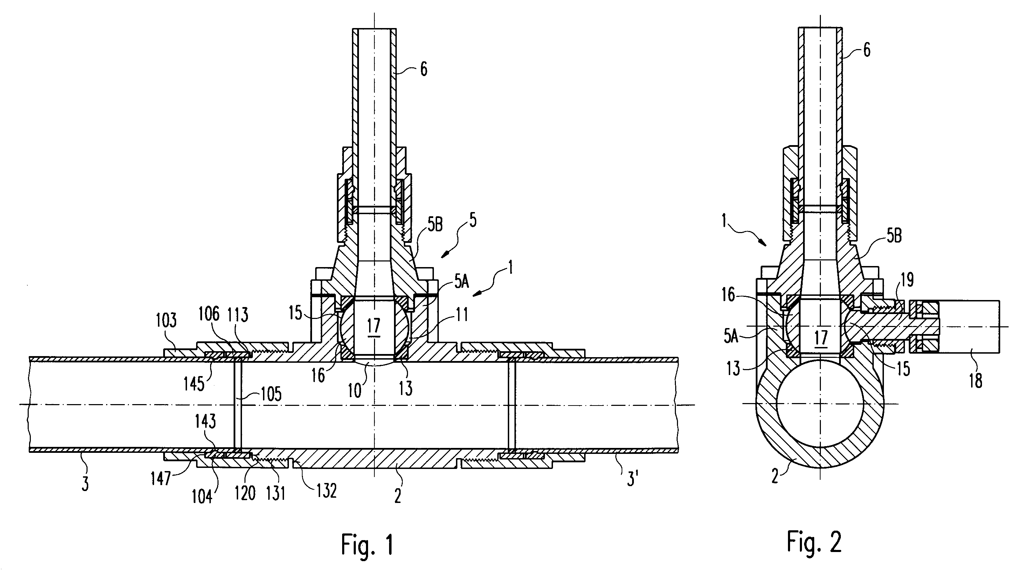

In den Querteil 5 des T-Stücks 1 ist ein Kugelhahn 15 eingebaut, der im wesentlichen durch das in dem Innenraum 11 des mit dem Längsteil 2 einstückigen Innenteils 5A sitzende, als Dichtkörper des Absperrorgans der abgehenden Leitutung dienende kugelförmige Küken 16 gebildet wird. Das Küken 16 ist an einer im Querteil 5 gelagerten Welle 19 (Fig. 2) befestigt und mit dieser um eine quer zu den beiden Achsen des T-Stücks liegende Achse drehbar. Zum Drehen des Kükens 16 ist an der Welle 19 ein externer Handgriff 18 angeschraubt.

Der Hahn ist in der Zeichnung in seiner offenen Stellung gezeigt, in der die durch das Küken 16 führende Bohrung 17 parallel zur gemeinsamen Achse des Querteils 5 und der in den Längsteil 2 führenden Bohrung 10 liegt und mit der Bohrung 10 fluchtend den Weg aus der Hauptleitung in das Leitungsrohr 6 öffnet. Zum Schließen des Hahns wird das Küken 16 unter Verwendung des Handgriffs 18 um 90° aus der dargestellten Lage gedreht, so daß seine Bohrung 17 nun parallel zur Rohrachse des Längsteils 2 steht und das Küken 16 mit seinen Kugelflächen am einen Ende die durch die Bohrung 10 gebildete Öffnung der Innenfläche des Längsteils 2 und am entgegengesetzen Ende die in den Außtenteil 5B führende Öffnung des Innenraums 11 dicht verschließt.

Wesentlich für die Erfindung ist, daß das Küken 16 bei geschlossenem Kugelhahn einerseits nicht in den zylindrischen Innenraum des Längsteils 2 hineinragen soll, andererseits aber die durch die Bohrung 10 gebildete Öffnung der Innenwand des Längsteils 2 möglichst weitgehend verschließt, so daß in der Bohrung 10 von der Hauptleitung aus nur ein minimaler Totraum zugänglich bleibt, der problemlos beim Spülen (und Molchen) der Hauptleitung erfaßt wird, im Gegensatz zu dem Totraum zwischen dem Längsteil des T-Stücks und dem Absperrorgan der abgehenden Leitungen bekannter Verzweigungsanordnungen. Zu diesem Zweck ist das Küken so positioniert, daß es in der Schließstellung mit seinem dem Innenraum des Längsteils 2 zugewandten Stirnende wenigstens annähernd mit der zylindrischen Innenfläche des Längsteils 2 fluchtet, d.h. auf der längs der Innenfläche durch die Mitte der Bohrung 10 verlaufenden Fluchtungslinie liegt.

Die Erfindung ist nicht auf das dargestellte Beispiel eines Kugelhahns beschränkt. Beispielsweise könnte auch ein zylindrisches Küken verwendet werden.

Für gute Spül- und Molchbarkeit der Hauptleitung einschließlich des T-Stücks 1 ist zum Anschluß der Leitungsrohre 3 und 3' an das Leitungsteil 2 vorzugsweise eine Schraubverbindung vorgesehen, die dem in der DE-Patentanmeldung 197 29 849.4 erläuterten Konstruktionsprinzip entspricht und spaltfreie und stufenlose Übergänge der Leitungsinnenflächen bei einfacher Montierbarkeit ermöglicht.

Demgemäß wird die Schraubverbindung im wesentlichen durch eine Schraubmutter 103 und ein aus zwei Halbschalen (nicht dargestellt) bestehendes Verbindungsbauteil 104 gebildet. Die Schraubmutter 103 sitzt auf den mit ihren Innenflächen miteinander fluchtenden Enden des Leitungsrohres 3 und des Längsteils 2 und ist bei dem dargestellten Beispiel mit einem Innengewinde bei 131 auf ein Gewinde in der zylindrischen Außenseite des Längsteils 2 geschraubt. Das Längsteil 2 hat eine radial verlaufende Stufenfläche 120 zwischen seinem Gewindeteil bei 131 und seinem axialen Endteil 113, das einen kleineren Außendurchmesser als das Gewindeteil und dieselben Innen- und Außendurchmesser wie das Ende des Leitungsrohres 3 hat. Der Stufenfläche 120 steht axial fluchtend in einem gewissen Abstnad eine innere Stufenfläche 147 der Schraubmutter 103 gegenüber, die zwischen dem das Innengewinde enthaltenden Teil der Mutter und deren auf dem Leitungsrohr 3 sitzenden Endteil radial nach innen verläuft. Der Innendurchmesser dieses dem T-Stück abgewandten Endteils der Schraubmutter 103 entspricht etwa dem Außendurchmesser des Leitungsrohres 3.

Das ringförmige, zur Bildung seiner beiden halbzylindrischen Schalen längs einer achsparallelen Ebene geteilte Verbindungsbauteil 104 sitzt auf dem Ende des Leitungsrohres 3 und greift mit einem von seiner zylindrischen Innenfläche radial nach innen vorspringenden flanschartigen Ringteil 143 in eine ringförmige Nut 145 ein, die in der Außenfläche des Leitungsrohres 3 gebildet ist, so daß das Verbindungsbauteil 104 zuverlässig formschlüssig an der Außenseite des Leitungsrohres 3 angreift. Gegen die dem T-Stück abgewandte radial verlaufende Endfläche des Verbindungsbauteils 104 drückt die innere Stufenfläche 147 der Schraubmutter 103, so daß das Leitungsrohr 3 durch die Wirkung der Schraubmutter gegen das T-Stück geschoben werden kann. Zwischen den durch die Schraubmutter 103 aneinandergedrückten Stirnenden des Leitungsrohres 3 und des Längsteils 2 sitzt ein Dichtungsring 105, der von einem zylindrischen Außenring 106 umgeben ist, welcher darstellungsgemäß in dem innerhalb der Schraubmutter 103 zwischen dem Verbindungsbauteil 104 und der Stufenfläche 120 des Längsteils 2 gebildeten Raum angeordnet ist.

Die Bewegung der Schraubmutter 103 in Richtung gegen das T-Stück und damit die axiale Beaufschlagung des Dichtungsrings 105 werden durch einen Anschlag begrenzt, der beispielsweise durch eine radial Stirnfläche 132 in der Außenseite des T-Stücks gebildet sein kann, gegen die die Schraubmutter 103 mit ihrem dem T-Stück zugewandten Ende stößt. Stattdessen kann auch der Außenring 106 zur Bewegungsbegrenzung dienen.

Diesselbe Schraubverbindung ist an dem entgegengesetzten Ende des Längsteils 2 für das Leitungsrohr 3' und vorzugsweise auch an dem Außenteil 5B des Querteils 5 für das Leitungsrohr 6 vorgesehen. In Abwandlung der hier beschriebenen Schraubverbindung kann beispielsweise auch die etwas andere Konstruktion gemäß der erwähnten DE-Patentanmeldung 197 29 849.4 verwendet werden, bei der anstelle der Schraubmutter 103 eine hohlzylindrische Befestigungsschraube mit einem Außengewinde in das Rohrverbindungsstück eingeschraubt ist.

## Patentansprüche

1. Rohrverzweigungsanordnung für Rohrleitungen
mit einem längs in eine Hauptrohrleitung (3, 3') eingesetzten oder einsetzbaren T-Stück (1), an das eine quer zur Richtung der Hauptrohrleitung abzweigende Rohrleitung (6) angeschlossen oder anschließbar ist, wobei eine Öffnung (10) der Innenfläche des Längsteils (2) des T-Stücks (1) in dessen Querteil (5) führt,
und mit einem Absperrorgan (15), dessen Dichtkörper (16) zum Schließen und Öffnen der abzweigenden Rohrleitung (6) bewegbar ist,
**dadurch gekennzeichnet**, daß das Absperrorgan (15) in das T-Stück (1) eingebaut ist
und sein Dichtkörper (16) in der Schließstellung an der Öffnung (10) der Innenfläche des Längsteils (2) des T-Stücks (1) angeordnet ist.

2. Rohrverzweigungsanordnung nach Anspruch 1,
**dadurch gekennzeichnet**, daß als Dichtkörper das Küken (16) eines Absperrhahns (15) in das T-Stück (1) eingebaut ist und das Küken (16) mit seinem dem Innenraum des Längsteils (2) des T-Stücks zugewandten Stirnende mit der zylindrischen Innenfläche des Längsteils (2) fluchtet oder von dem Querteil (5) aus so nahe an der Fluchtungslinie liegt, daß in der verschlossenen Öffnung (10) kein wesentlicher Totraum verbleibt.

3. Rohrverzweigungsanordnung nach Anspruch 1 oder 2,
**dadurch gekennzeichnet**, daß das in das T-Stück (1) eingebaute Absperrorgan ein Kugelhahn (15) ist.

4. Rohrverzweigungsanordnung nach einem der Ansprüche 1 bis 3,
**dadurch gekennzeichnet**, daß der Dichtkörper (16) an einer in dem Querteil (5) gelagerten Welle (19) befestigt und mit einem von außen betätigbaren Handgriff (18) in seine Öffnungs- und Schließstellungen drehbar ist.

5. Rohrverzweigungsanordnung nach einem der vorhergehenden Ansprüche,
**dadurch gekennzeichnet**, daß der Querteil (5) des T-Stücks (1) zweiteilig ist und in seinem mit dem Längsteil (2) einstückigen Innenteil (5A) das Absperrorgan (15) enthält, während sein entfernbar auf dieses Innenteil (5A) geschraubtes Außenteil (5B) mit den Mitteln zum Anschließen des abzweigenden Leitungsrohres (6) versehen ist.

6. Rohrverzweigungsanordnung nach einem der vorangehenden Ansprüche,
**dadurch gekennzeichnet**, daß das von dem Längsteil (2) und von dem Absperrorgan (15) abgewandte Ende des Querteils (5) und/oder die beiden Enden des Längsteils (2) des T-Stücks (1), mit den Innenflächen der jeweils angeschlossenen Leitungsrohre (3, 3', 6) fluchtende und deren axiale Fortsetzung bildende zylindrische Innenflächen haben, wobei die Stirnfläche des Leitungsrohrs (3) einer Stirnfläche des T-Stücks (1) gegenübersteht,
daß ein formschlüssig an der Außenseite des Leitungsrohrs (3) eingreifendes Verbindungsbauteil (104) vorgesehen ist,
und daß das Leitungsrohr (3) mit dem Verbindungsbauteil (104) von einem auf oder in das Ende des T-Stücks (1) geschraubten Schraubelement (103) gegen das T-Stück verschiebbar ist.

7. Rohrverzweigungsanordnung nach Anspruch 6,
**dadurch gekennzeichnet**, daß das Verbindungsbauteil (104) ringförmig ist und aus mindestens zwei teilzylindrischen Schalen besteht, die mit ihrer halb- oder teilzylindrischen Innenfläche auf der Außenfläche des Leitungsrohrs (3) sitzen und mit einem von ihrer Innenfläche radial nach innen vorspringenden Ringteil (143) in eine Nut (145) des Leitungsrohr (3) eingreifen.

8. Rohrverzweigungsanordnung nach Anspruch 6 oder 7,
**dadurch gekennzeichnet**, daß das Schraubelement (103) mit einer radial verlaufenden Fläche (147) in Achsrichtung gegen eine radial verlaufende Stirnfläche des Verbindungsbauteils (104) drückt.

9. Rohrverzweigungsanordnung nach einem der Ansprüche 6 bis 8,
**dadurch gekennzeichnet**, daß sich zwischen der Stirnfläche des Leitungsrohrs (3) und der ihr zugewandten Stirnfläche des T-Stücks eine ringförmige Dichtung (105) befindet.

10. Rohrverzweigungsanordnung nach einem der Ansprüche 6 bis 9,
**dadurch gekennzeichnet**, daß die Relativbewegung zwischen dem T-Stück (1) und dem Schraubelement (103) und damit die Annäherung des Leitungsrohrendes an die Stirnfläche des T-Stücks (1) durch einen Anschlag (132) begrenzt ist.
